# EUROPEAN PATENT SPECIFICATION

(11) **EP 3 915 080 B1**
(45) Date of publication and mention of the grant of the patent: **01.04.2026**
(21) Application number: 20745878.7
(22) Date of filing: 24.01.2020
(51) Int. Cl.: G06Q 20/38, G06Q 30/0207, G06Q 30/0241

(54) **IN-STORE PRINTING OF PERSONALIZED, ADDED VALUE CERTIFICATES**
DRUCKEN IM GESCHÄFT VON PERSONALISIERTEN MEHRWERTZERTIFIKATEN
IMPRESSION EN MAGASIN DE CERTIFICATS DE VALEUR AJOUTÉE PERSONNALISÉS

(30) Priority: 24.01.2019 US 201962796532 P
(43) Date of publication of application: 01.12.2021
(73) Proprietor: Catalina Marketing Corporation, St. Petersburg, FL 33716 (US)
(72) Inventor: SINGH, Zubin, St. Petersburg, Florida 33716 (US); SOUTHWELL, Tiffany, St. Petersburg, Florida 33716 (US); HUNTER, Kevin, St. Petersburg, Florida 33716 (US); BEAN, Wesley, St. Petersburg, Florida 33716 (US); WOLFE, Adam, St. Petersburg, Florida 33716 (US); DAIL, Jeremy, St. Petersburg, Florida 33716 (US); DIKUN, Kirk, St. Petersburg, Florida 33716 (US); MONAHAN, Ryan, St. Petersburg, Florida 33716 (US); DELIC, Vedran, St. Petersburg, Florida 33716 (US); DUNPHY, Brian Matthew, St. Petersburg, Florida 33716 (US)
(74) Representative: Betten & Resch
(86) International application number: PCT/US2020/015068
(87) International publication number: WO 2020/154671

(56) References cited:
- GB-A- 2 503 917
- KR-A- 20150 055 651
- US-A1- 2012 158 469
- US-A1- 2016 094 598
- US-A1- 2016 321 696
- US-A1- 2017 228 776
- US-A1- 2017 265 027

## Description

### CROSS-REFERENCE TO RELATED APPLICATIONS

The present disclosure is related to, and claims priority under the rules and regulations of the PCT, to US Provisional Patent Application No. 62/796532, entitled "IN-STORE PRINTING OF PERSONALIZED, ADDED VALUE CERTIFICATES," to Zubin SINGH, filed on January 24, 2019.

### BACKGROUND

### Field

The present disclosure generally relates to systems for in-store, personalized provisioning of value added certificates for consumers via a remote server. More specifically, embodiments as disclosed herein relate to in-store printing or loading of consumers coupons from a loyalty card account of a consumer in a remote server.

### Description of the Related Art

Current coupon validation and retrieval requires consumers to print paper copies of generic and personalized coupons, vouchers and other value added certificates in advance of entering a store. Accordingly, consumers typically have easy access to general coupons at the store, which may have limited value, determined according to generic retail or brand campaigns and marketing strategies. Thus, consumers may forfeit the availability of likely much better offers and coupons that may be available to the specific consumer based on a shopping history or other personal details through a consumer loyalty network, or a special subscription to a consumer network in a retail store.

UK patent application 2 503 917 A teaches a voucher terminal comprising: a scanner for reading data provided on any one or more of a number of data-bearing surfaces, a processor adapted to interpret the read data and to generate an electronic version of the read data in the form of a standardized voucher containing the read data displayed in a standardized format, a printer for reproducing the standardized voucher in a printed form, and an interface adapted to transmit the electronic version of the read data to a remote data server.

US patent application 2012/158469 A1 describes a method of converting a digital voucher to a tangible voucher.

### SUMMARY

The invention is defined by the independent claims. Dependent claims specify embodiments thereof.

In one embodiment, a computer-implemented method is provided that includes receiving, in a client device, a trigger signal from a trigger device in a retail store. The computer-implemented method also includes activating a network application in the client device in response to the trigger signal, the network application communicating the client device with a remote server, providing an authentication credential to access the remote server upon receipt of a prompt from the network application in the client device, and displaying a personalized consumer item upon validation of the authentication credential. The computer-implemented method also includes providing, to the remote server, a request for at least one of: (i) printing at least a portion of the personalized consumer item in a local printer, or (ii) loading the at least one portion of the personalized consumer item to a consumer account in the remote server.

In a second embodiment, a computer-implemented method is disclosed that includes prompting a consumer to input an authentication credential in a network application to access an account in a server, the network application operating in a client device. The computer-implemented method also includes validating the authentication credential in a database and providing, for display by the network application in the client device, a personalized consumer item, the personalized consumer item associated with the account in the server. The computer-implemented method also includes receiving, from the network application in the client device, a print request from the consumer for a selected portion of the personalized consumer item and transmitting a print command to a printer for printing the selected portion of the personalized consumer item.

In yet another embodiment, a system is disclosed that includes a memory storing instructions and a processor. The processor is configured to execute at least one instruction and cause the system to: prompt a consumer to input an authentication credential in a network application to access an account in a server, the network application operating in a client device and to validate the authentication credential in a database; providing, for display by the network application in the client device, a personalized consumer item, the personalized consumer item associated with the account in the server. The processor further executes instructions to receive, from the network application in the client device, a print request from the consumer for a selected portion of the personalized consumer item; and transmit a print command to a printer for printing the selected portion of the personalized consumer item.

### BRIEF DESCRIPTION OF THE DRAWINGS

FIG. 1 illustrates a system configured for in-store printing of added value certificates for consumers, according to some embodiments.
FIG. 2 illustrates an example architecture suitable for implementing the system in FIG. 1, according to some embodiments.
FIG. 3 illustrates a block diagram including devices and steps in a system for in-store printing of added value certificates, according to some embodiments.
FIG. 4 is a flowchart including steps in a method for in-store printing of personalized, added value certificates, according to some embodiments.
FIG. 5 is a flowchart including steps in a method for printing a personalized consumer item, according to some embodiments.
FIG. 6 is a flowchart including steps in a method for handling a request to print personalized consumer items, according to some embodiments.
FIG. 7 illustrates a block diagram illustrating an example computer system with which the client and network device of FIG. 1 and the methods of FIGS. 4-6 can be implemented, according to some embodiments.

In the figures, elements labeled with the same or similar reference numerals may have similar functionality and features, unless stated otherwise.

### DETAILED DESCRIPTION

In the following detailed description, numerous specific details are set forth to provide a full understanding of the present disclosure. It will be apparent, however, to one ordinarily skilled in the art, that the embodiments of the present disclosure may be practiced without some of these specific details. In other instances, well-known structures and techniques have not been shown in detail so as not to obscure the disclosure.

A system as provided herein is configured to print paper based personalized consumer packaged goods (CPG) promotion content in-store, in real-time and on-demand using a real-time input trigger device. Some embodiments provide an end-to-end system to print in-store using a SMART printer, and trigger considerations using a mobile software development kit (SDK), interfacing with encoding schemes like quick response (QR) codes, and short-range communication sensors such as Bluetooth enabled beacons, and NFC sensors, termed as a trigger device(s).

According to some embodiments, a method for printing and or a consumer redeeming added value certificates at a point of sale terminal, in-store is disclosed. In some embodiments, the validated certificate is made available to the consumer immediately, and independently of the point of sale (POS) vendor or a point of sale device *(e.g.,* card register cashier's computer, and the like). For example, in some embodiments, a printer in the store provides the consumer with a paper printout of a coupon, voucher, or other value added certificate, which the consumer may take to the POS for validation at checkout time. In some embodiments, the consumer may load one or more coupons for selected products into a personal loyalty card account in the remote server, using a wireless or cellularly connected networked personal client device like a mobile phone. By interfacing with the remote server, once the coupon is loaded into the consumer's loyalty account, the consumer may redeem the coupon at the POS by authenticating the loyalty card credentials, *e*.*g*., by typing in a phone number or other identification data into a POS device (*e.g.,* a card reader, a scanner, or a type-in device).

Embodiments as disclosed herein include activating a trigger device at a kiosk or other in-store location (*e.g.,* the POS) with a client device. The triggering mechanism may include encoding schemes like quick response (QR) codes, and short-range communication sensors such as Bluetooth enabled beacons, Wi-Fi sensors, and near-field NFC sensors, that interface with the consumer's personal networked client device. The triggering mechanism may activate an application, a web browser installed in the client device, or invokes a set of interfaces to fetch content from a remote server, which displays a landing page or offers content meta-data to the consumer. In some embodiments, the landing page requests input from the consumer, such as a telephone number or other authentication code(s) to verify the identity of the consumer. The landing page may be hosted by the remote server, which accesses the personal loyalty card account and information of the consumer, and displays, in the client device, one or more non-personalized and/or personalized offers (*e*.*g*., coupons, vouchers, and the like) that the consumer is entitled to. The consumer may then select to print one or more offers on-site, or load one or more offers to the loyalty card account for redemption at the POS.

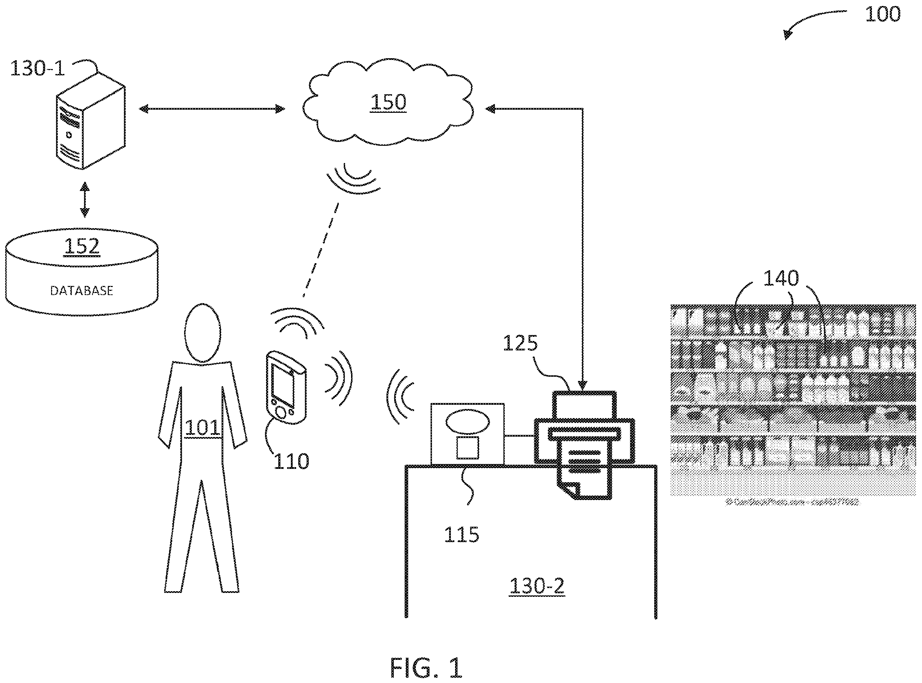

FIG. 1 illustrates a system 100 configured for in-store printing of added value certificates for consumers. A consumer 101 stands in front or around an in-store server 130-2. In some embodiments, in-store server 130-2 is a kiosk located nearby a set of products 140 of particular interest to the consumer (*e*.*g*., wines, delicatessen, toys, tools, sporting goods, women's clothing, and the like). In some embodiments, in-store server 130-2 may be located at or nearby the point of sale (POS) in a retailer store. In-store server 130-2 may include a trigger device 115 that is able to accept a signal or action emitted by a triggering mechanism coupled to a printer 125, which may be communicatively coupled with a remote server 130-1 via a network 150 (*e.g.,* through an Ethernet link, an optical link, a wireless link, a cellular network, and the like). Network 150 can include, for example, any one or more of a local area network (LAN), a wide area network (WAN), the Internet, and the like. Further, network 150 can include, but is not limited to, any one or more of the following network topologies, including a bus network, a star network, a ring network, a mesh network, a star-bus network, tree or hierarchical network, and the like.

Remote server 130-1 may host a consumer loyalty network of which consumer 101 may be a subscriber via a loyalty card account. Consumer 101 may activate triggering device 115 with a client device 110, prompting an interaction with remote server 130-1 or in-store server 130-2. Consumer 101 may activate the triggering mechanism through a wireless ID, Bluetooth, near field communication (NFC), Wi-Fi, or a QR recognition from a camera feature in the client device. In some embodiments, an application or software development kit (SDK) hosted by remote server 130-1 and installed in client device 110 invokes a web browser, or remote API calls, to fetch content and content meta-data, or other network applications in client device 110. Accordingly, client device 110 displays a "landing page" or builds a listing of offers, coupons, promotions, and deals on the client device. The landing page or any other application on client device 110 activated by trigger device 115 may include one or more personalized offers, coupons, and other value added certificates available to consumer 101 from the consumer loyalty network, through remote server 130-1.

Remote server 130-1 may request an authentication credential from consumer 101 (*e.g.,* a phone number and the like) to access the consumer loyalty card account in a database 152. When remote server 130-1 authenticates consumer 101, it provides to client device 110 a display of one or more offers of added value certificates and associated meta-data for consumer 101. The added value certificates may be associated with products 140 in the vicinity of the kiosk or POS. Printer 125 is configured to print one or more added value certificates upon a request from consumer 101. Consumer 101 may then take the printed added value certificate to the POS, together with the product, for validation upon purchase.

Client device 110 may be a cell phone, a smart phone, a tablet computer, or any other type of electronic appliance that is communicably coupled with remote server 130-1 through network 150 (*e.g.,* via wireless communication such as a cellular network, RF, Wi-Fi, and the like). Remote server 130-1 not only verifies the validity of a loyalty card account of consumer 101, but also can verify the precise location of consumer 101 at the store (*e.g.,* the location of the kiosk or POS). Accordingly, remote server 130-1 may send the printout to the appropriate printer 125, and at an appropriate time. In some embodiments, remote server 130-1 may determine the precise location and timing of the consumer by triangulating or multiplexing different types of signals from different sensors in the store or the vicinity of the kiosk or POS (*e*.*g*., sensor fusion).

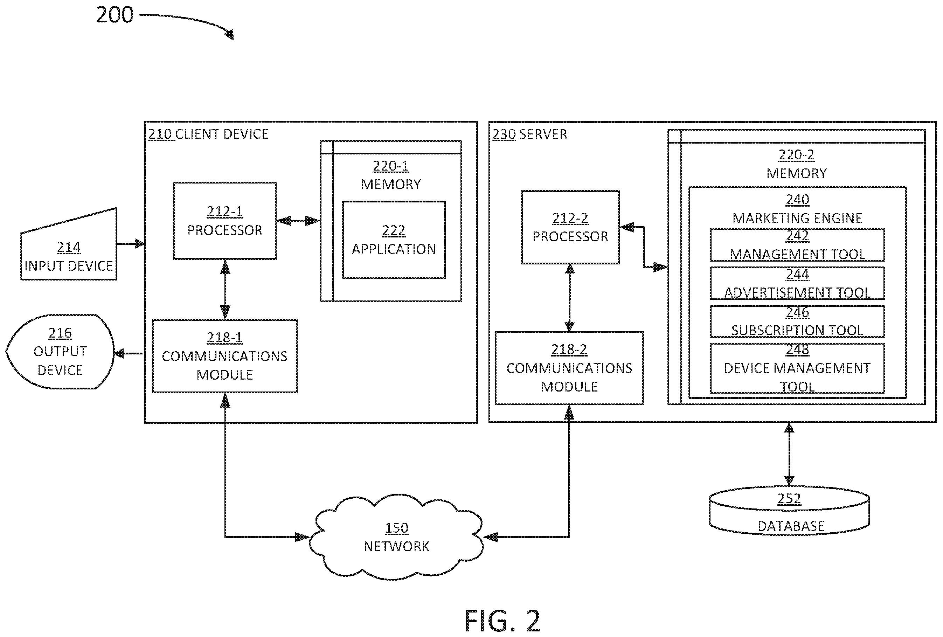

FIG. 2 illustrates an example architecture 200 suitable for implementing the system in FIG. 1, according to some embodiments. A client device 210 is communicatively coupled with a server 230 via network 150. Server 230 may also have access to a database 252 via network 150. In some embodiments, database 252 may be part of server 230. While architecture 200 only shows one server 230 and one client device 210, in some embodiments multiple client devices may couple to multiple servers through network 150, of which client device 210 and server 230 are but one example. Client device 210 may include a personal computer, a portable or mobile computer (*e.g.,* a laptop), a cell phone, a smartphone, a palm device, or any other device such as a printer, a smart printer, or a display.

Client device 210 and server 230 may include a processor 212-1 and a memory 220-1 (client device 210), a processor 212-2 and a memory 220-2 (server 230), hereinafter, collectively referred to as "processors 212" and "memories 220." A communications module 218-1 in client device 210 and a communications module 218-2 in server 230 enable interfacing each of these devices with network 150 (hereinafter, collectively referred to as "communications modules 218"). Communications modules 218 may include radio frequency circuitry and antennas configured to transmit and receive radio frequency signals such as Bluetooth, near field coupling, Wi-Fi, and the like. In that regard, communications modules 218 may enable one or more client devices as client device 210 and one or more servers as server 230 to communicate to one another directly, separately from network 150.

Memory 220-1 may include an application 222 (*e*.*g*., application programing interface -API-) including instructions which, when executed by processor 212-1, cause client device 210 to execute at least partially some of the methods disclosed herein. In some embodiments, application 222 may be installed and hosted by server 230 upon a consumer authorization. Likewise, memory 220-2 may include a marketing engine 240 having instructions which, when executed by processor 212-2, cause server 230 to execute at least partially some of the methods consistent with the present disclosure.

Marketing engine 240 performs marketing analysis and devises advertisement campaign strategies as well as promotional offers to consumers in view of business rules, advertisement rules, and consumer profiles. In some embodiments, marketing engine 240 includes a management tool 242, an advertisement tool 244, a subscription tool 246, and a device management tool 248. In some embodiments, management tool 242 includes analytics algorithms based on business rules. In some embodiments, advertisement tool 244 includes algorithms based on campaign rules, campaign management, campaign optimization, and campaign analytics, and handling campaign errors. In some embodiments, subscription tool 246 includes identity resolution algorithms, and is configured to perform identity mapping and onboarding of new subscribers. In some embodiments, device management tool 248 which includes printer reporting and troubleshooting, printer health and configuration, and installing and updating digital platform adaptors and interfaces in client device 210.

Database 252 may include purchasing information for the consumer operating client device 210. Database 252 may also include a correlation table associating a device identification code for client device 210 with a consumer purchasing history. Database 252 may also include information from retail stores, and brand manufacture products.

Client device 210 may also include or be communicatively coupled with one or more peripheral devices such as an input device 214 and an output device 216.

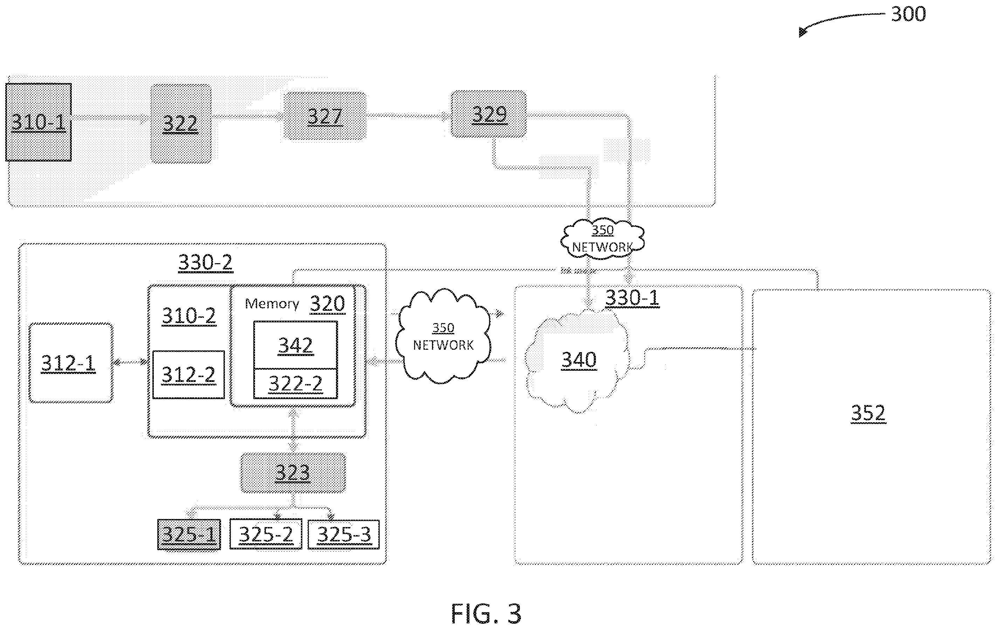

FIG. 3 illustrates a block diagram including devices and steps in a system 300 for in-store printing of added value certificates, according to some embodiments. In some embodiments, a consumer taps an input trigger such as an NFC tile or collects the image of a QR code using a client device 310-1 (*e.g.,* cell phone, smart phone, palm device, and the like), in the vicinity of a kiosk that is located in a section of a store that includes products of interest for the consumer (*e*.*g*., consumer 101, trigger device 115, in-store server 130-2, and client devices 110 or 210, *cf.* FIGS. 1 and 2). A network application 322 (*e*.*g*., a browser) may include a "landing page" or content is displayed on client device 310, including personalized coupons for the consumer. For example, the personalized coupons may include products in the vicinity of the kiosk in the store (*e.g.,* products 140, *cf.* FIG. 1). The consumer may select from the display which coupons to print, or load to a loyalty card account. A representational state transfer (REST-full) service 329 in network application 322 of client device 310-1 makes a call to a remote server hosting a consumer loyalty network to get the personalized coupons (*e*.*g*., load the coupons to the consumer's account), or to create a print request 327 for the coupons, to an in-store printer.

The triggering mechanism may be an encoding scheme like quick response (QR) codes, and short-range communication sensors such as Bluetooth enabled beacons, and NFC sensors, termed as a trigger device(s). In some embodiments, the capture of a QR code could induce the launch of a web browser or native code (*e*.*g*., application 322) in client device 310-1 as covered by the QR code capabilities and implementation on client device 310. For example, an input device attached to client device 310-1 (*e.g.,* cellphone camera, or input device 214, *cf.* FIG. 2) 'understands' the QR code and performs a 'call-to-action.' In some embodiments, the activation includes accessing a login page at a server 330-1 hosting the consumer loyalty network (*e.g.,* remote server 130-1, *cf.* FIG. 1). The consumer then enters authentication credentials (*e*.*g*., a phone number, or loyalty card number) to access a personalized coupon portal.

In some embodiments, a Login authentication workflow includes loading a login page or mechanisms (*e.g.,* via input device 214, *cf.* FIG. 2) to solicit consumer login details (or any other authentication credential) that a consumer can enter that is linked to their loyalty account. In some embodiments, a phone number associated with client device 310-1 is retrieved automatically via an API provided by the retailer to client device 310-1 (*e.g.,* application 222, *cf.* FIG. 2). The API returns a globally unique identifier (GUID) or a loyalty card identifier that can be referenced in a database 352 (*e.g.,* data warehouse, and databases 152 and 252). Server 330-1 may access database 352 to power personalization and privacy for the consumer. In some embodiments, server 330-1 applies a number of logic operations to the GUID or the loyalty card identifier in a marketing engine 340 for validation and authentication (*e.g.,* marketing engine 240, *cf.* FIG. 2). In some embodiments, the login page and the personalized coupon portal are hosted by server 310-1, which is communicatively coupled with a marketing engine 340 (*e.g.,* marketing engine 240, *cf.* FIG. 2) and a network 350 through a set of interfaces and APIs. In embodiments consistent with the present disclosure, marketing engine 340 performs business logic operations and controls triggering logic for a trigger device at the retail store, to initiate communication with the consumer through client device 310-1. In some embodiments, marketing engine 340 provides a POS feed, a promotion feed, an events feed, and a printer status information to a database 352 (*e.g.,* via a Hadoop distributed file system HDFS and the like). In some embodiments, the login page and the personalized coupon portal are hosted within a retail server 330-2, which is communicatively coupled with server 330-1 through network 350. Accordingly, in some embodiments, retail server 330-2 makes an external call to server 330-1 to fetch the personalized coupon content for the consumer.

In some embodiments, a software development kit (SDK) implementation in client device 310-1 enables the reading of NFC codes from an NFC tile in a trigger device at an in-store kiosk or POS (*e.g.,* trigger device 115, *cf.* FIG. 1). Accordingly, the retailer may integrate the system specific code, or SDK, from the server. The consumer then downloads network application 322 (*e.g.,* a retailer's mobile application, or application 222, *cf.* FIG. 2) to enable the trigger device in the retailer to activate client device 310-1 (*e.g.,* via an NFC tile-tap or Bluetooth beacons within the vicinity of the in-store kiosk).

Network application 322 installed in client device 310-1 (*e.g.,* application 222, *cf.* FIG. 2) may allow a consumer to enable a SMART Printer script (*e.g.,* a hypertext markup language java script) in print request 327. Network application 322 may include a "landing page" hosted by the retailer server 330-2. The landing page may display, for the consumer, coupons and personalized value added certificates and offers. The consumer may then select to print, from application 322, one or more of the coupons, and personalized value added certificates and offers. Accordingly, the SDK will transmit a mobile advertising device identifier and additional accompanying meta-data to server 330-1 (*e.g.,* a cellphone identifier, as stored in the operating system of the device, or a consumer loyalty card identifier, and the like).

Server 330-1 receives and authenticates the device identifier along with additional meta-data and sends back to client device 310-1 a playlist containing the personalized coupon/offer meta-data. The playlist from server 330-1 may be executed for the consumer by the mobile application installed in client device 310-1 (*e.g.,* application 222, *cf.* FIG. 2). Some of the personalized information provided by server 330-1 may be retrieved from database 352 or other resources within the marketing engine and accompanying infrastructure. For example, in some embodiments, database 352 includes a consumer purchasing history with one or more retailers, and with multiple brands and product services handled by server 330-1. In some embodiments, server 330-2 assembles a landing page in network application 322 to display the offers in the context of a retailer mobile application (*e*.*g*., featuring retailer logos, advertisements, and the like). In some embodiments, server 330-1 sends a print request to server 330-2 (which may be located at the retail store) to print the value added certificate, coupon, or offer for the consumer. In return, server 330-2 provides status information of printers 325 and other hardware associated with a kiosk or POS at the retail store to server 330-1.

In some embodiments, print server 323 may be coupled to multiple printers 325-1, 325-2, and 325-3 (hereinafter, collectively referred to as "printers 325") located in different in-store kiosks (*e.g.,* at the Deli aisle, the wine aisle, or even at multiple POS or cashiers). The printer may be a "smart" printer 325-1 in the sense that it adjusts a personalized "on-demand" printout for the consumer. In some embodiments, server 330-1, a Smart Printer APIs in client device 310-1, or other system interfaces send remote print request(s) to the in-store personal computer (PC) 310-2 in real-time to control any one of printers 325. In some embodiments, the instructions to printers 325 may be provided to print server 323, or directly to a controller in any one of printers 325 to perform various actions. In some embodiments, the in-store PC 310-2 or printer server 323 is a thin server in network 350, communicatively coupled with server 330-1. PC 310-2 may include a memory 320 and a processor 312-2. Memory 320 may include an operating system 342 and an application 322-2 to drive print server 323. A processor 312-1 may act as a controller for one or more client devices such as client device 310-2 (*e.g.,* an in-store personal computer -PC-), distributed about a retail store.

In some embodiments, when the consumer is logged into retail server 330-2 (*e.g.,* via a retailer application) and follows the retailer's own authentication protocols, there is no separate authentication workflow for server 330-1. In some embodiments, retail server 330-2 integrates libraries for operating system configuration provided by server 330-1 as a part of the "Smart Printer Mobile SDK" installed with the retailer's mobile application in client device 310-1.

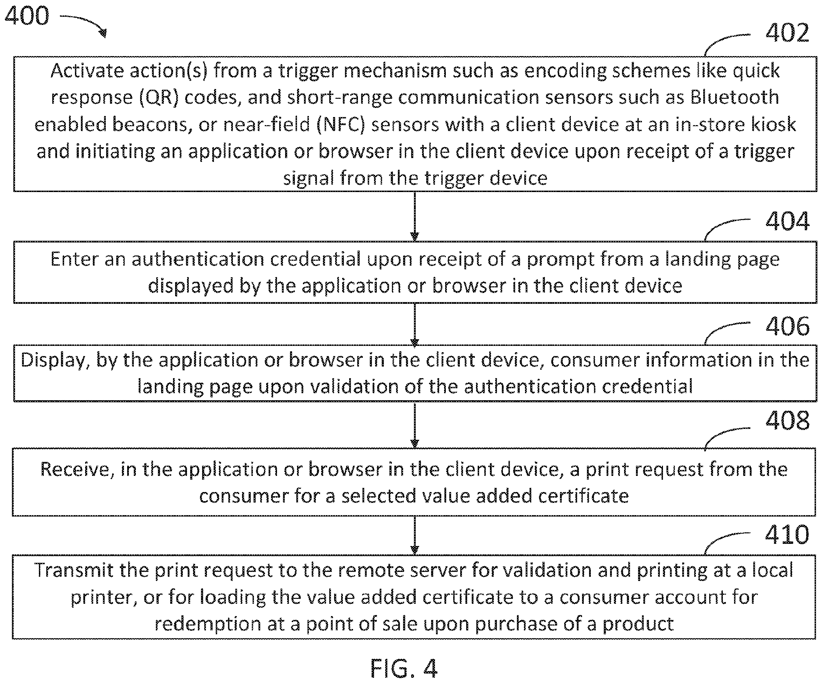

FIG. 4 illustrates steps in a method 400 for in-store printing of personalized, added value certificates, according to some embodiments. In some embodiments, one or more of the steps in method 400 may be performed by one or more of the devices and components illustrated in FIGS. 1 and 2. For example, in some embodiments, one or more of the steps in method 400 may be performed by a client device or a server including processors executing instructions stored in memory circuits (*e*.*g*., client devices 110, 210, and 310, and servers 130, 230, and 330, processors 212 and memories 220, *cf.* FIGS. 1, 2, and 3). In some embodiments, the memory may include a marketing engine having a management tool, an advertisement tool, a subscription tool, and a device management tool (*e*.*g*., marketing engine 240, management tool 242, advertisement tool 244, subscription tool 246, and device management tool 248, *cf.* FIG. 2). In some embodiments, the server may also be communicatively coupled to a database storing consumer information such as consumer purchasing history, via a network (*e*.*g*., databases 152, 252, and 352, and network 150 and 350, *cf.* FIGS. 1, 2, and 3). In some embodiments, to communicate with each other and the network, the client devices and servers may execute steps consistent with method 400 using an input device, an output device, and a communications module, (*e*.*g*., input device 214, output device 216, and communications module 218, *cf.* FIG. 2). Moreover, in some embodiments, methods consistent with the present disclosure may include at least one of the steps in method 400 performed in a different order, simultaneously, quasi-simultaneously, or overlapping in time.

Step 402 includes activating action(s) from a trigger mechanisms such as encoding schemes like quick response (QR) codes, and short-range communication sensors such as Bluetooth enabled beacons, and near-field NFC sensors with a client device at an in-store kiosk and initiating an application or browser in the client device upon receipt of a trigger signal from the trigger device.

Step 404 includes entering (by the consumer), an authentication credential *(e.g.,* a phone number) upon receipt of a prompt from a landing page displayed by the application or browser in the client device.

Step 406 includes displaying, by the application or browser in the client device, a consumer information in the landing page, upon validation of the authentication credential.

Step 408 includes receiving, in the application or browser in the client device, a print request from the consumer for a selected value added certificate (*e*.*g*., coupon).

Step 410 includes transmitting the print request to the remote server for validation and printing at a local printer. In some embodiments, step 410 includes transmitting to the remote server a request for loading the value added certificate to a consumer account, for redemption at a POS, upon purchase of a product.

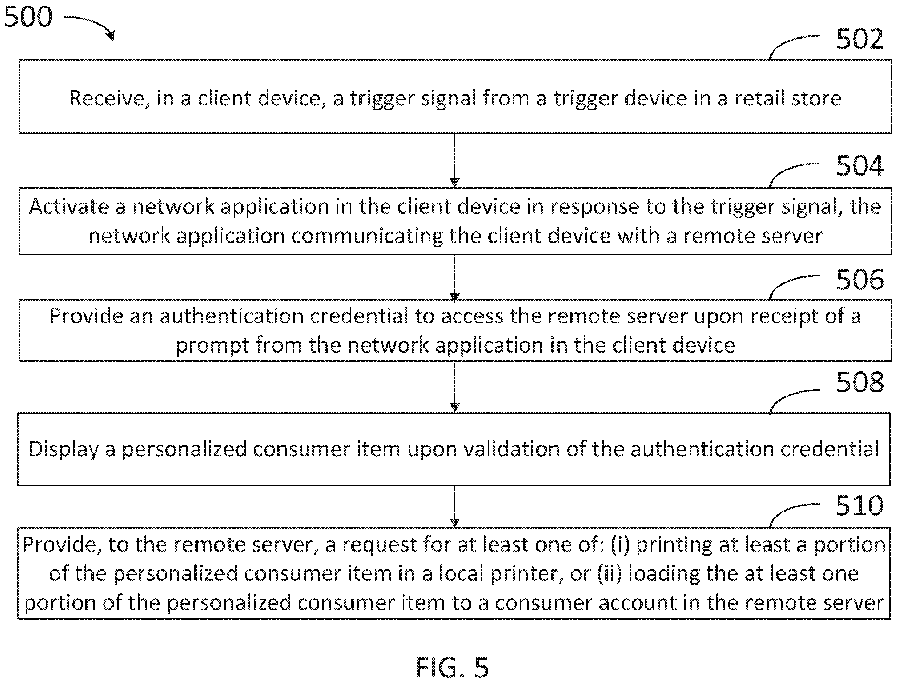

FIG. 5 is a flowchart including steps in a method 500 for printing a personalized consumer item, according to some embodiments. In some embodiments, one or more of the steps in method 500 may be performed by one or more of the devices and components illustrated in FIGS. 1 and 2. For example, in some embodiments, one or more of the steps in method 500 may be performed by a client device or a server including processors executing instructions stored in memory circuits (*e*.*g*., client devices 110, 210, and 310, and servers 130, 230, and 330, processors 212 and memories 220, *cf.* FIGS. 1, 2, and 3). In some embodiments, the memory may include a marketing engine having a management tool, an advertisement tool, a subscription tool, and a device management tool (*e*.*g*., marketing engine 240, management tool 242, advertisement tool 244, subscription tool 246, and device management tool 248, *cf.* FIG. 2). In some embodiments, the server may also be communicatively coupled to a database storing consumer information such as consumer purchasing history, via a network (*e*.*g*., databases 152, 252, and 352, and network 150 and 350, *cf.* FIGS. 1, 2, and 3). In some embodiments, to communicate with each other and the network, the client devices and servers may execute steps consistent with method 500 using an input device, an output device, and a communications module, (*e*.*g*., input device 214, output device 216, and communications module 218, *cf.* FIG. 2). Moreover, in some embodiments, methods consistent with the present disclosure may include at least one of the steps in method 500 performed in a different order, simultaneously, quasi-simultaneously, or overlapping in time.

Step 502 includes receiving, in a client device, a trigger signal from a trigger device in a retail store. In some embodiments, step 502 includes receiving one of a quick response code, a Bluetooth enabled beacon or a radio frequency code, in one of a video camera or a short-range communication sensor in the client device. In some embodiments, step 502 includes initiating a network application in the client device upon receipt of a trigger signal from the trigger mechanism, and displaying a portal for the remote server in the client device, to provide the authentication credentials. In some embodiments, the trigger device is part of a retail server communicatively coupled with the remote server, and step 502 includes receiving from the retail server a printer script to select the local printer. In some embodiments, the trigger device is part of an in-store kiosk or a computer located at a point of sale of a retail store, and step 502 includes receiving at least one of a quick response code image in a camera, or a radio frequency beacon in an antenna. In some embodiments, step 502 includes downloading a software development kit from the remote server to interact with the trigger device.

Step 504 includes activating a network application in the client device in response to the trigger signal, the network application communicating the client device with a remote server.

Step 506 includes providing an authentication credential to access the remote server upon receipt of a prompt from the network application in the client device.

Step 508 includes displaying a personalized consumer item upon validation of the authentication credential.

Step 510 includes providing, to the remote server, a request for at least one of: (i) printing at least a portion of the personalized consumer item in a local printer, or (ii) loading the at least one portion of the personalized consumer item to a consumer account in the remote server. In some embodiments, the personalized consumer item is a value added certificate, a coupon, or a discount offer, and step 510 further includes selecting the local printer for printing the value added certificate, the coupon, or the discount offer, from multiple local printers available in the retail store. In some embodiments, step 510 further includes selecting the portion of the personalized consumer item for printing or loading to the consumer account from one or more coupons, offers, and value added certificates in the personalized consumer item. In some embodiments, step 510 further includes loading the at least one portion of the personalized consumer item to a display in the client device, for redemption at a point of sale in the retail store. In some embodiments, step 510 further includes calling the remote server from a representational state transfer service in the network application.

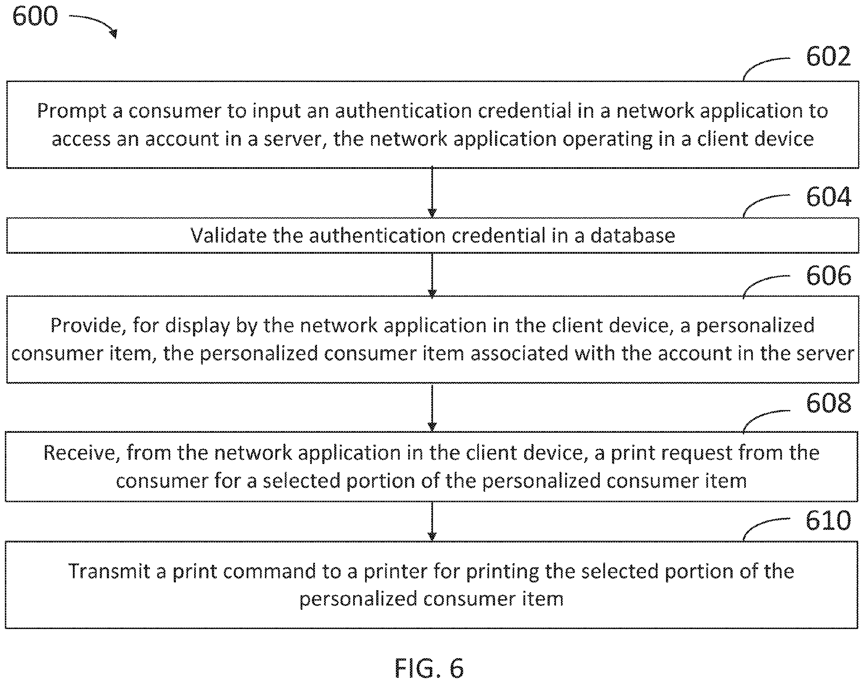

FIG. 6 is a flowchart including steps in a method 600 for handling a request to print personalized consumer items, according to some embodiments. In some embodiments, one or more of the steps in method 600 may be performed by one or more of the devices and components illustrated in FIGS. 1 and 2. For example, in some embodiments, one or more of the steps in method 600 may be performed by a client device or a server including processors executing instructions stored in memory circuits (*e*.*g*., client devices 110, 210, and 310, and servers 130, 230, and 330, processors 212 and memories 220, *cf.* FIGS. 1, 2, and 3). In some embodiments, the memory may include a marketing engine having a management tool, an advertisement tool, a subscription tool, and a device management tool (*e*.*g*., marketing engine 240, management tool 242, advertisement tool 244, subscription tool 246, and device management tool 248, *cf.* FIG. 2). In some embodiments, the server may also be communicatively coupled to a database storing consumer information such as consumer purchasing history, via a network (*e*.*g*., databases 152, 252, and 352, and network 150 and 350, *cf.* FIGS. 1, 2, and 3). In some embodiments, to communicate with each other and the network, the client devices and servers may execute steps consistent with method 600 using an input device, an output device, and a communications module, (*e*.*g*., input device 214, output device 216, and communications module 218, *cf.* FIG. 2). Moreover, in some embodiments, methods consistent with the present disclosure may include at least one of the steps in method 600 performed in a different order, simultaneously, quasi-simultaneously, or overlapping in time.

Step 602 includes prompting a consumer to input an authentication credential in a network application to access an account in a server, the network application operating in a client device.

Step 604 includes validating the authentication credential in a database.

Step 606 includes providing, for display by the network application in the client device, a personalized consumer item, the personalized consumer item associated with the account in the server. In some embodiments, step 606 further includes selecting the personalized consumer item based on a purchase history of the consumer. In some embodiments, step 606 further includes selecting the personalized consumer item based on an advertising campaign for a brand manufacturer.

Step 608 includes receiving, from the network application in the client device, a print request from the consumer for a selected portion of the personalized consumer item.

Step 610 includes transmitting a print command to a printer for printing the selected portion of the personalized consumer item. In some embodiments, step 610 includes identifying a location of the consumer in a retail store based on a signal from the network application, and selecting the printer based on the location of the consumer in the retail store. In some embodiments, step 610 includes loading the personalized consumer item to the account in the database. In some embodiments, step 610 includes verifying a status of the printer prior to transmitting the print command, and debugging an error status when the printer is not ready.

### Hardware Overview

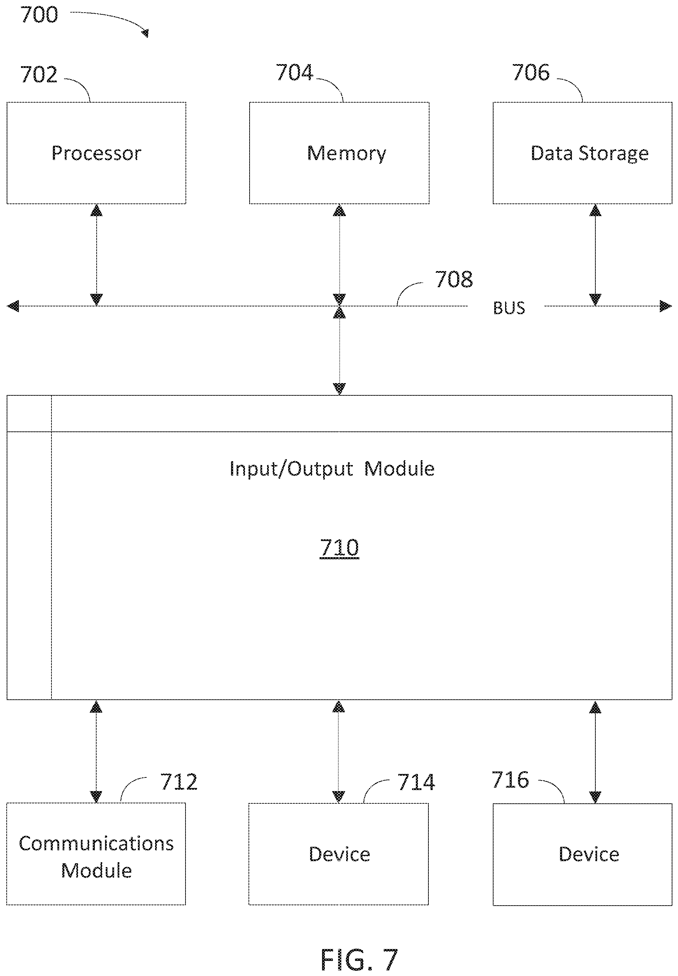

FIG. 7 is a block diagram illustrating an example computer system 700 with which the client and network device of FIG. 1 and the methods of FIGS. 4-6 can be implemented. In certain aspects, computer system 700 may be implemented using hardware or a combination of software and hardware, either in a dedicated network device, or integrated into another entity, or distributed across multiple entities.

Computer system 700 (*e.g.,* client device 110 and server 130) includes a bus 708 or other communication mechanism for communicating information, and a processor 702 (*e.g.,* processors 212) coupled with bus 708 for processing information. By way of example, the computer system 700 may be implemented with one or more processors 702. Processor 702 may be a general-purpose microprocessor, a microcontroller, a Digital Signal Processor (DSP), an Application Specific Integrated Circuit (ASIC), a Field Programmable Gate Array (FPGA), a Programmable Logic Device (PLD), a controller, a state machine, gated logic, discrete hardware components, or any other suitable entity that can perform calculations or other manipulations of information.

Computer system 700 can include, in addition to hardware, code that creates an execution environment for the computer program in question, *e*.*g*., code that constitutes processor firmware, a protocol stack, a database management system, an operating system, or a combination of one or more of them stored in an included memory 704 (*e*.*g*., memories 220), such as a Random Access Memory (RAM), a flash memory, a Read-Only Memory (ROM), a Programmable Read-Only Memory (PROM), an Erasable PROM (EPROM), registers, a hard disk, a removable disk, a CD-ROM, a DVD, or any other suitable storage device, coupled to bus 708 for storing information and instructions to be executed by processor 702. The processor 702 and the memory 704 can be supplemented by, or incorporated in, special purpose logic circuitry.

The instructions may be stored in the memory 704 and implemented in one or more computer program consumer products, *e.g.,* one or more modules of computer program instructions encoded on a computer-readable medium for execution by, or to control the operation of, the computer system 700, and according to any method well known to those of skill in the art, including, but not limited to, computer languages such as data-oriented languages (*e.g.,* SQL, dBase), system languages (*e.g.,* C, Objective-C, C++, Assembly), architectural languages (*e.g.,* Java, .NET), and application languages (*e.g.,* PHP, Ruby, Perl, Python). Instructions may also be implemented in computer languages such as array languages, aspect-oriented languages, assembly languages, authoring languages, command line interface languages, compiled languages, concurrent languages, curly-bracket languages, dataflow languages, data-structured languages, declarative languages, esoteric languages, extension languages, fourth-generation languages, functional languages, interactive mode languages, interpreted languages, iterative languages, list-based languages, little languages, logic-based languages, machine languages, macro languages, metaprogramming languages, multiparadigm languages, numerical analysis, non-English-based languages, object-oriented class-based languages, object-oriented prototype-based languages, off-side rule languages, procedural languages, reflective languages, rule-based languages, scripting languages, stack-based languages, synchronous languages, syntax handling languages, visual languages, wirth languages, and xml-based languages. Memory 704 may also be used for storing temporary variable or other intermediate information during execution of instructions to be executed by processor 702.

A computer program as discussed herein does not necessarily correspond to a file in a file system. A program can be stored in a portion of a file that holds other programs or data (*e.g.,* one or more scripts stored in a markup language document), in a single file dedicated to the program in question, or in multiple coordinated files (*e.g.,* files that store one or more modules, subprograms, or portions of code). A computer program can be deployed to be executed on one computer or on multiple computers that are located at one site or distributed across multiple sites and interconnected by a communication network. The processes and logic flows described in this specification can be performed by one or more programmable processors executing one or more computer programs to perform functions by operating on input data and generating output.

Computer system 700 further includes a data storage device 706 such as a magnetic disk or optical disk, coupled to bus 708 for storing information and instructions. Computer system 700 may be coupled via input/output module 710 to various devices. Input/output module 710 can be any input/output module. Exemplary input/output modules 710 include data ports such as USB ports. The input/output module 710 is configured to connect to a communications module 712. Exemplary communications modules 712 (*e*.*g*., communications modules 218) include networking interface cards, such as Ethernet cards and modems. In certain aspects, input/output module 710 is configured to connect to a plurality of devices, such as an input device 714 (*e.g.,* input device 114) and/or an output device 716 (*e.g.,* output device 116). Exemplary input devices 714 include a keyboard and a pointing device, *e.g.,* a mouse or a trackball, by which a consumer can provide input to the computer system 700. Other kinds of input devices 714 can be used to provide for interaction with a consumer as well, such as a tactile input device, visual input device, audio input device, or brain-computer interface device. For example, feedback provided to the consumer can be any form of sensory feedback, *e.g.,* visual feedback, auditory feedback, or tactile feedback; and input from the consumer can be received in any form, including acoustic, speech, tactile, or brain wave input. Exemplary output devices 716 include display devices, such as an LCD (liquid crystal display) monitor, for displaying information to the consumer.

According to one aspect of the present disclosure, the client device 110 and server 130 can be implemented using a computer system 700 in response to processor 702 executing one or more sequences of one or more instructions contained in memory 704. Such instructions may be read into memory 704 from another machine-readable medium, such as data storage device 706. Execution of the sequences of instructions contained in main memory 704 causes processor 702 to perform the process steps described herein. One or more processors in a multi-processing arrangement may also be employed to execute the sequences of instructions contained in memory 704. In alternative aspects, hard-wired circuitry may be used in place of or in combination with software instructions to implement various aspects of the present disclosure. Thus, aspects of the present disclosure are not limited to any specific combination of hardware circuitry and software.

Various aspects of the subject matter described in this specification can be implemented in a computing system that includes a back-end component, *e.g*., a data network device, or that includes a middleware component, *e.g*., an application network device, or that includes a front-end component, *e.g*., a client computer having a graphical consumer interface or a Web browser through which a consumer can interact with an implementation of the subject matter described in this specification, or any combination of one or more such back-end, middleware, or front-end components. The components of the system can be interconnected by any form or medium of digital data communication, *e.g*., a communication network. The communication network (*e*.*g*., network 150) can include, for example, any one or more of a LAN, a WAN, the Internet, and the like. Further, the communication network can include, but is not limited to, for example, any one or more of the following network topologies, including a bus network, a star network, a ring network, a mesh network, a star-bus network, tree or hierarchical network, or the like. The communications modules can be, for example, modems or Ethernet cards.

Computer system 700 can include clients and network devices. A client and network device are generally remote from each other and typically interact through a communication network. The relationship of client and network device arises by virtue of computer programs running on the respective computers and having a client-network device relationship to each other. Computer system 700 can be, for example, and without limitation, a desktop computer, laptop computer, or tablet computer. Computer system 700 can also be embedded in another device, for example, and without limitation, a mobile telephone, a PDA, a mobile audio player, a Global Positioning System (GPS) receiver, a video game console, and/or a television set top box.

The term "machine-readable storage medium" or "computer-readable medium" as used herein refers to any medium or media that participates in providing instructions to processor 702 for execution. Such a medium may take many forms, including, but not limited to, non-volatile media, volatile media, and transmission media. Non-volatile media include, for example, optical or magnetic disks, such as data storage device 706. Volatile media include dynamic memory, such as memory 704. Transmission media include coaxial cables, copper wire, and fiber optics, including the wires forming bus 708. Common forms of machine-readable media include, for example, floppy disk, a flexible disk, hard disk, magnetic tape, any other magnetic medium, a CD-ROM, DVD, any other optical medium, punch cards, paper tape, any other physical medium with patterns of holes, a RAM, a PROM, an EPROM, a FLASH EPROM, any other memory chip or cartridge, or any other medium from which a computer can read. The machine-readable storage medium can be a machine-readable storage device, a machine-readable storage substrate, a memory device, a composition of matter affecting a machine-readable propagated signal, or a combination of one or more of them.

In one aspect, a method may be an operation, an instruction, or a function and vice versa. In one aspect, a claim may be amended to include some or all of the words (*e*.*g*., instructions, operations, functions, or components) recited in other one or more claims, one or more words, one or more sentences, one or more phrases, one or more paragraphs, and/or one or more claims.

To illustrate the interchangeability of hardware and software, items such as the various illustrative blocks, modules, components, methods, operations, instructions, and algorithms have been described generally in terms of their functionality. Whether such functionality is implemented as hardware, software or a combination of hardware and software depends upon the particular application and design constraints imposed on the overall system. Skilled artisans may implement the described functionality in varying ways for each particular application.

As used herein, the phrase "at least one of" preceding a series of items, with the terms "and" or "or" to separate any of the items, modifies the list as a whole, rather than each member of the list (*e.g.,* each item). The phrase "at least one of" does not require selection of at least one item; rather, the phrase allows a meaning that includes at least one of any one of the items, and/or at least one of any combination of the items, and/or at least one of each of the items. By way of example, the phrases "at least one of A, B, and C" or "at least one of A, B, or C" each refer to only A, only B, or only C; any combination of A, B, and C; and/or at least one of each of A, B, and C.

The word "exemplary" is used herein to mean "serving as an example, instance, or illustration." Any embodiment described herein as "exemplary" is not necessarily to be construed as preferred or advantageous over other embodiments. Phrases such as an aspect, the aspect, another aspect, some aspects, one or more aspects, an implementation, the implementation, another implementation, some implementations, one or more implementations, an embodiment, the embodiment, another embodiment, some embodiments, one or more embodiments, a configuration, the configuration, another configuration, some configurations, one or more configurations, the subject technology, the disclosure, the present disclosure, other variations thereof and alike are for convenience and do not imply that a disclosure relating to such phrase(s) is essential to the subject technology or that such disclosure applies to all configurations of the subject technology. A disclosure relating to such phrase(s) may apply to all configurations, or one or more configurations. A disclosure relating to such phrase(s) may provide one or more examples. A phrase such as an aspect or some aspects may refer to one or more aspects and vice versa, and this applies similarly to other foregoing phrases.

A reference to an element in the singular is not intended to mean "one and only one" unless specifically stated, but rather "one or more." Pronouns in the masculine (*e*.*g*., his) include the feminine and neuter gender (*e.g.,* her and its) and vice versa. The term "some" refers to one or more. Underlined and/or italicized headings and subheadings are used for convenience only, do not limit the subject technology, and are not referred to in connection with the interpretation of the description of the subject technology. Relational terms such as first and second and the like may be used to distinguish one entity or action from another without necessarily requiring or implying any actual such relationship or order between such entities or actions.

## Claims

1. A computer-implemented method comprising:
initiating a network application in a client device upon receipt of a trigger signal from a trigger device, wherein the trigger device is at a kiosk in a retail store;
prompting a consumer to input an authentication credential in the network application to access an account in a server, the network application operating in the client device;
validating the authentication credential in a database;
providing, for display by the network application in the client device, a personalized value added certificate for a consumer item, the consumer item associated with the account in the server, wherein the consumer item is in a vicinity of the kiosk;
providing, to the client device, a status of at least one printer for the consumer to select a printer of the at least one printer;
receiving, from the network application in the client device, a print request from the consumer for a selected portion of the personalized value added certificate for the consumer item; and
transmitting a print command to the printer for printing the selected portion of the personalized value added certificate for the consumer item.

2. The computer-implemented method of claim 1, further comprising selecting the personalized value added certificate for the consumer item based on a purchase history of the consumer.

3. The computer-implemented method of any one of claims 1 and 2, further comprising selecting the personalized value added certificate for the consumer item based on an advertising campaign for a brand manufacturer.

4. The computer-implemented method of any one of claims 1 through 3, further comprising identifying a location of the consumer in the retail store based on a signal from the network application, and selecting the printer based on the location of the consumer in the retail store.

5. The computer-implemented method of any one of claims 1 through 4, further comprising loading the personalized value added certificate for the consumer item to the account in the database.

6. The computer-implemented method, as in any one of claims 1 through 5, further comprising verifying a status of the printer prior to transmitting the print command, and debugging an error status when the printer is not ready.

7. A system, comprising:
a memory storing instructions; and
a processor configured to execute at least one instruction and cause the system to:
initiate a network application in a client device upon receipt of a trigger signal from a trigger device, wherein the trigger device is at a kiosk in a retail store;
prompt a consumer to input an authentication credential in the network application to access an account in a server, the network application operating in the client device;
validate the authentication credential in a database;
provide, for display by the network application in the client device, a personalized value added certificate for a consumer item, the consumer item associated with the account in the server, wherein the consumer item is in a vicinity of the kiosk;
provide, to the client device, a status of at least one printer for the consumer to select a printer of the at least one printer;
receive, from the network application in the client device, a print request from the consumer for a selected portion of the personalized value added certificate for the consumer item; and
transmit a print command to the printer for printing the selected portion of the personalized value added certificate for the consumer item.

8. The system of claim 7, wherein the processor executes at least one instruction and causes the system to identify a location of the consumer in the retail store based on a signal from the network application, and selecting the printer based on the location of the consumer in the retail store.

9. The system of claims 7 and 8, wherein the processor executes at least one instruction and causes the system to load the personalized value added certificate of the consumer item to the account in the database.

10. The system of claims 7 through 9, wherein the processor executes at least one instruction and causes the system to select the personalized value added certificate of the consumer item based on a purchase history of the consumer.

11. The system of claims 7 through 9, wherein the processor executes at least one instruction and causes the system to identify a location of the consumer in the retail store based on a signal from the network application.

12. The system of claims 7 through 11, wherein the processor executes at least one instruction and causes the system to select the printer based on a location of the consumer in the retail store.

13. The system of claims 7 through 12, wherein the processor executes at least one instruction and causes the system to load the personalized value added certificate for the consumer item to the account in the database.

14. The system of claims 7 through 13, wherein the processor executes at least one instruction and causes the system to verify a status of the printer prior to transmit the print command.

15. The system of claims 7 through 14, wherein the processor executes at least one instruction and causes the system to debug an error status when the printer is not ready.

## Patentansprüche

1. Computerimplementiertes Verfahren, das Folgendes umfasst:
Starten einer Netzanwendung in einer Client-Vorrichtung bei Empfang eines Auslösesignals von einer Auslösevorrichtung, wobei sich die Auslösevorrichtung bei einem Kiosk in einem Einzelhandelsgeschäft befindet;
Auffordern eines Verbrauchers, einen Berechtigungsnachweis in die Netzanwendung einzugeben, um auf ein Konto in einem Server zuzugreifen, wobei die Netzanwendung in der Client-Vorrichtung läuft;
Validieren des Berechtigungsnachweises in einer Datenbank;
Bereitstellen für eine Anzeige durch die Netzanwendung in der Client-Vorrichtung eines um einen Wert ergänzten personalisierten Zertifikats für einen Verbraucherartikel, wobei der Verbraucherartikel dem Konto in dem Server zugeordnet ist, wobei sich der Verbraucherartikel in einer Umgebung des Kiosks befindet;
Bereitstellen für die Client-Vorrichtung eines Status wenigstens eines Druckers für den Verbraucher, um einen Drucker des wenigstens einen Druckers auszuwählen;
Empfangen von der Netzanwendung in der Client-Vorrichtung einer Druckanforderung von dem Verbraucher für einen ausgewählten Abschnitt des um einen Wert ergänzten personalisierten Zertifikats für den Verbraucherartikel; und
Senden eines Druckbefehls zu dem Drucker, um den ausgewählten Abschnitt des um einen Wert ergänzten personalisierten Zertifikats für den Verbraucherartikel zu drucken.

2. Computerimplementiertes Verfahren nach Anspruch 1, das ferner das Auswählen des um einen Wert ergänzten personalisierten Zertifikats für den Verbraucherartikel basierend auf einer Kaufhistorie des Verbrauchers umfasst.

3. Computerimplementiertes Verfahren nach einem der Ansprüche 1 und 2, das ferner das Auswählen des um einen Wert ergänzten personalisierten Zertifikats für den Verbraucherartikel basierend auf einer Werbekampagne für einen Markenhersteller umfasst.

4. Computerimplementiertes Verfahren nach einem der Ansprüche 1 bis 3, das ferner das Identifizieren eines Ortes des Verbrauchers in dem Einzelhandelsgeschäft basierend auf einem Signal von der Netzanwendung und das Auswählen des Druckers basierend auf dem Ort des Verbrauchers in dem Einzelhandelsgeschäft umfasst.

5. Computerimplementiertes Verfahren nach einem der Ansprüche 1 bis 4, das ferner das Laden des um einen Wert ergänzten personalisierten Zertifikats für den Verbraucherartikel in das Konto in der Datenbank umfasst.

6. Computerimplementiertes Verfahren nach einem der Ansprüche 1 bis 5, das ferner das Verifizieren eines Status des Druckers vor dem Senden des Druckbefehls und das Beenden eines Fehlerstatus, wenn der Drucker nicht bereit ist, umfasst.

7. System, das Folgendes umfasst:
einen Speicher, in dem Anweisungen gespeichert sind; und
einen Prozessor, der konfiguriert ist, wenigstens eine Anweisung auszuführen und das System zu veranlassen zum:
Starten einer Netzanwendung in einer Client-Vorrichtung bei Empfang eines Auslösesignals von einer Auslösevorrichtung, wobei sich die Auslösevorrichtung bei einem Kiosk in einem Einzelhandelsgeschäft befindet;
Auffordern eines Verbrauchers, einen Berechtigungsnachweis in die Netzanwendung einzugeben, um auf ein Konto in einem Server zuzugreifen, wobei die Netzanwendung in der Client-Vorrichtung läuft;
Validieren des Berechtigungsnachweises in einer Datenbank;
Bereitstellen für eine Anzeige durch die Netzanwendung in der Client-Vorrichtung eines um einen Wert ergänzten personalisierten Zertifikats für einen Verbraucherartikel, wobei der Verbraucherartikel dem Konto in dem Server zugeordnet ist, wobei sich der Verbraucherartikel in einer Umgebung des Kiosks befindet;
Bereitstellen für die Client-Vorrichtung eines Status wenigstens eines Druckers für den Verbraucher, um einen Drucker des wenigstens einen Druckers auszuwählen;
Empfangen von der Netzanwendung in der Client-Vorrichtung einer Druckanforderung von dem Verbraucher für einen ausgewählten Abschnitt des um einen Wert ergänzten personalisierten Zertifikats für den Verbraucherartikel; und
Senden eines Druckbefehls zu dem Drucker, um den ausgewählten Abschnitt des um einen Wert ergänzten personalisierten Zertifikats für den Verbraucherartikel zu drucken.

8. System nach Anspruch 7, wobei der Prozessor wenigstens eine Anweisung ausführt und das System veranlasst, einen Ort des Verbrauchers in dem Einzelhandelsgeschäft basierend auf einem Signal von der Netzanwendung zu identifizieren und den Drucker basierend auf dem Ort des Verbrauchers in dem Einzelhandelsgeschäft auszuwählen.

9. System nach den Ansprüchen 7 und 8, wobei der Prozessor wenigstens eine Anweisung ausführt und das System veranlasst, das um einen Wert ergänzte personalisierte Zertifikat des Verbrauchartikels in das Konto in der Datenbank zu laden.

10. System nach den Ansprüchen 7 bis 9, wobei der Prozessor wenigstens eine Anweisung ausführt und das System veranlasst, das um einen Wert ergänzte personalisierte Zertifikat basierend auf der Kaufhistorie des Verbrauchers auszuwählen.

11. System nach den Ansprüchen 7 bis 9, wobei der Prozessor wenigstens eine Anweisung ausführt und das System veranlasst, einen Ort des Verbrauchers in dem Einzelhandelsgeschäft basierend auf einem Signal von der Netzanwendung zu identifizieren.

12. System nach den Ansprüchen 7 bis 11, wobei der Prozessor wenigstens eine Anweisung ausführt und das System veranlasst, den Drucker basierend auf einem Ort des Verbrauchers in dem Einzelhandelsgeschäft auszuwählen.

13. System nach den Ansprüchen 7 bis 12, wobei der Prozessor wenigstens eine Anweisung ausführt und das System veranlasst, das um einen Wert ergänzte personalisierte Zertifikat für den Verbraucherartikel in das Konto in der Datenbank zu laden.

14. System nach den Ansprüchen 7 bis 13, wobei der Prozessor wenigstens eine Anweisung ausführt und das System veranlasst, vor dem Senden des Druckbefehls einen Status des Druckers zu verifizieren.

15. System nach den Ansprüchen 7 bis 14, wobei der Prozessor wenigstens eine Anweisung ausführt und das System veranlasst, einen Fehlerstatus zu beenden, wenn der Drucker nicht bereit ist.

## Revendications

1. Un procédé mis en œuvre par ordinateur, comprenant :
le fait de lancer une application réseau dans un dispositif client à la réception d'un signal de déclenchement provenant d'un dispositif de déclenchement, le dispositif de déclenchement se trouvant dans une borne dans un magasin de détail ;
le fait d'inviter un consommateur à saisir un identifiant d'authentification dans l'application réseau pour accéder à un compte dans un serveur, l'application réseau fonctionnant dans le dispositif client ;
le fait de valider l'identifiant d'authentification dans une base de données ;
le fait de fournir, pour affichage par l'application réseau dans le dispositif client, un bon promotionnel personnalisé pour un article de consommation, l'article de consommation étant associé au compte dans le serveur, l'article de consommation se trouvant à proximité de la borne ;
le fait de fournir, à l'appareil client, un état d'au moins une imprimante afin que le consommateur puisse sélectionner une imprimante parmi ladite au moins une imprimante ;
le fait de recevoir, de l'application réseau, dans l'appareil client, une demande d'impression de la part du consommateur pour une partie sélectionnée du bon promotionnel personnalisé pour l'article de consommation ; et
le fait de transmettre une commande d'impression à l'imprimante afin d'imprimer la partie sélectionnée du bon promotionnel personnalisé pour l'article de consommation.

2. Le procédé mis en œuvre par ordinateur selon la revendication 1, comprenant en outre le fait de sélectionner le bon promotionnel personnalisé pour l'article de consommation sur la base d'un historique d'achat du consommateur.

3. Le procédé mis en œuvre par ordinateur selon l'une quelconque des revendications 1 et 2, comprenant en outre le fait de sélectionner le bon promotionnel personnalisé pour l'article de consommation sur la base d'une campagne publicitaire pour un fabricant de marque.

4. Le procédé mis en œuvre par ordinateur selon l'une quelconque des revendications 1 à 3, comprenant en outre le fait d'identifier l'emplacement du consommateur dans le magasin de détail sur la base d'un signal provenant de l'application réseau, et de sélectionner l'imprimante sur la base de l'emplacement du consommateur dans le magasin de détail.

5. Le procédé mis en œuvre par ordinateur selon l'une quelconque des revendications 1 à 4, comprenant en outre le fait de charger le bon promotionnel personnalisé pour l'article de consommation sur le compte dans la base de données.

6. Le procédé mis en œuvre par ordinateur, comme dans l'une quelconque des revendications 1 à 5, comprenant en outre le fait de vérifier l'état de l'imprimante avant de transmettre la commande d'impression, et de déboguer un état d'erreur lorsque l'imprimante n'est pas prête.

7. Un système comprenant :
une mémoire stockant des instructions ; et
un processeur configuré pour exécuter au moins une instruction et amener le système à :
lancer une application réseau dans un dispositif client à la réception d'un signal de déclenchement provenant d'un dispositif de déclenchement, le dispositif de déclenchement se trouvant dans une borne dans un magasin de détail ;
inviter un consommateur à saisir un identifiant d'authentification dans l'application réseau pour accéder à un compte sur un serveur, l'application réseau fonctionnant dans le dispositif client ;
valider l'identifiant d'authentification dans une base de données ;
fournir, pour affichage par l'application réseau dans le dispositif client, un bon promotionnel personnalisé pour un article de consommation, l'article de consommation étant associé au compte sur le serveur, l'article de consommation se trouvant à proximité de la borne ;
fournir au dispositif client l'état d'au moins une imprimante afin que le consommateur puisse sélectionner une imprimante parmi ladite au moins une imprimante ;
recevoir, de l'application réseau, dans le dispositif client, une demande d'impression de la part du consommateur pour une partie sélectionnée du bon promotionnel personnalisé pour l'article de consommation ; et
transmettre une commande d'impression à l'imprimante pour imprimer la partie sélectionnée du bon promotionnel personnalisé pour l'article de consommation.

8. Le système selon la revendication 7, dans lequel le processeur exécute au moins une instruction et amène le système à identifier un emplacement du consommateur dans le magasin de détail sur la base d'un signal provenant de l'application réseau, et à sélectionner l'imprimante sur la base de l'emplacement du consommateur dans le magasin de détail.

9. Le système selon les revendications 7 et 8, dans lequel le processeur exécute au moins une instruction et amène le système à charger le bon promotionnel personnalisé de l'article de consommation dans le compte présent dans la base de données.

10. Le système selon les revendications 7 à 9, dans lequel le processeur exécute au moins une instruction et amène le système à sélectionner le bon promotionnel personnalisé de l'article de consommation sur la base de l'historique d'achat du consommateur.

11. Le système selon les revendications 7 à 9, dans lequel le processeur exécute au moins une instruction et amène le système à identifier l'emplacement du consommateur dans le magasin de détail sur la base d'un signal provenant de l'application réseau.

12. Le système selon les revendications 7 à 11**,** dans lequel le processeur exécute au moins une instruction et amène le système à sélectionner l'imprimante sur la base de l'emplacement du consommateur dans le magasin de détail.

13. Le système selon les revendications 7 à 12, dans lequel le processeur exécute au moins une instruction et amène le système à charger le bon promotionnel personnalisé pour l'article de consommation sur le compte dans la base de données.

14. Le système selon les revendications 7 à 13, dans lequel le processeur exécute au moins une instruction et amène le système à vérifier l'état de l'imprimante avant de transmettre la commande d'impression.

15. Le système selon les revendications 7 à 14, dans lequel le processeur exécute au moins une instruction et amène le système à déboguer un état d'erreur lorsque l'imprimante n'est pas prête.
